# EUROPEAN PATENT SPECIFICATION

(11) **EP 2 551 155 B1**
(45) Date of publication and mention of the grant of the patent: **14.03.2018**
(21) Application number: 12177889.8
(22) Date of filing: 25.07.2012
(51) Int. Cl.: B60Q 1/14, G02B 26/08, F21S 8/10, F21V 14/00

(54) **Light distribution controller of headlamp**
Lichtverteilungssteuerung eines Scheinwerfers
Contrôleur de distribution lumineuse de phare

(30) Priority: 26.07.2011 JP 2011163225
(43) Date of publication of application: 30.01.2013
(73) Proprietor: Koito Manufacturing Co., Ltd., Tokyo 108-8711 (JP)
(72) Inventor: Kobayashi, Shoji, SHIZUOKA-SHI, SHIZUOKA (JP)
(74) Representative: Intès, Didier Gérard André

(56) References cited:
- EP-A1- 1 538 024
- EP-A1- 1 722 159
- EP-A1- 2 266 838
- EP-A1- 2 275 735
- DE-A1- 19 907 943
- DE-A1-102007 038 077
- DE-A1-102009 054 249
- JP-A- 2010 162 960

## Description

### BACKGROUND

### Technical Field

The present disclosure relates to light distribution controller for forming different light distribution patterns by controlling the light distribution of a vehicle headlight.

### Related Art

When a vehicle travels on a road including an opposite lane, the vehicle usually travels with low beams that are emitted downward from the headlights. When needed, for example, when a forward visual field further in the distance is required, such as at night, the vehicle generally travels with high beams that are emitted upward from the headlights.

However, when an upper region of the opposite lane above a cut-off line is irradiated with the high beams, glare affects the driver of the oncoming vehicle while an oncoming vehicle and the subject vehicle pass each other. For this reason, there is a problem in that the driver's visual recognition is hindered.

Documents DE 10 2007 038 077 A1 and JP 2010 162960 A disclose conventional solutions for solving the problem of glare, wherein illumination direction of a vehicle lamp is deflected when an oncoming vehicle is in the opposite lane.

Also, in order to solve the problem of glare, recently, as a light distribution control system for automobile headlamps, there have been provided a technique called ADB (Adaptive Driving Beam) that can block a beam irradiating an oncoming vehicle so as not to glare the driver of an oncoming vehicle when the oncoming vehicle and a subject vehicle pass each other, and a technique called AZB (Adaptive Zone Beaming) that is a modification of ADB and controls light distribution for each region (zone) on a screen positioned ahead of a vehicle by using liquid crystal elements or MEMS elements and an LED array.

For example, JP-A-2009-218155 discloses a vehicle headlight device that includes a plurality of light emitting elements arranged in a line in the horizontal direction and can form various light distribution patterns by controlling the presence or absence of light emitted from each of the light emitting elements or the amount of light.

In order to suppress glare given to a forward vehicle or a pedestrian while suppressing the generation of a region in front of a vehicle where it is difficult for a driver to recognize an object, the vehicle headlight device specifies the position of an oncoming vehicle on the basis of image data acquired by a camera or the like mounted on a vehicle and controls the light emitting elements so as to block light or reduce the amount of light on a region in front of the vehicle where it is presumed that an oncoming vehicle is present.

According to this, it is possible to prevent glare from being directed at the oncoming vehicle without switching the beams to low beams even when the oncoming vehicle and the subject vehicle pass each other. Accordingly, even at night, a vehicle can travel while irradiation performance on the road surface superior to the irradiation performance of low beams is maintained. In particular, the vehicle headlight device can exert a large effect in terms of the visibility of a pedestrian or a small animal that is present on the shoulder of the opposite lane.

However, there have been the following problems in light distribution control in JP-A-2009-218155.

In the ADB technique in the related art, when a subject vehicle and an oncoming vehicle pass each other while the subject vehicle travels, the road surface outside the oncoming vehicle is illuminated even though a beam irradiating the oncoming vehicle is blocked. Accordingly, it is considered that the ADB technique in the related art is advantageous in that a driver can visually recognize a pedestrian who is waiting on the shoulder close to the oncoming vehicle positioned between the subject vehicle and the oncoming vehicle to cross the road.

However, meanwhile, since a driver can recognize a pedestrian if the driver can visually recognize the pedestrian's knees, it is pointless to irradiate the entire body (upper portion above a cut-off line) of a person (pedestrian) who is waiting on the road and close to the oncoming vehicle when a pedestrian does not cross the road. Further, it is possible to widen a driver's range of observation by widely illuminating driver's field of view. Meanwhile, if the range of observation is widened, a driver can acquire information from a wide range but there is a concern that a visible range is reduced on the other region, particularly, on the travel lane in front of the subject vehicle that should be most carefully watched.

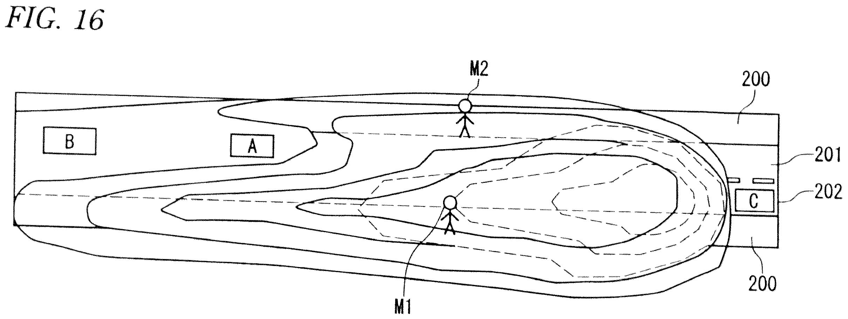

Furthermore, when the relative distance between the subject vehicle and the oncoming vehicle (headway time: (the time and distance until the subject vehicle and the oncoming vehicle pass each other)) is maintained within a certain range, there is a case that the crossing of the pedestrian M2 (see Fig. 16) present on the shoulder close to the opposite lane is not necessarily considered.

Fig. 16 is a view showing a road-surface irradiation image illustrating that a pedestrian crosses a road when a subject vehicle and an oncoming vehicle pass each other.

Fig. 17 is a view, which shows a screen positioned ahead of a subject vehicle in the AZB technique, corresponding to Fig. 16.

Fig. 16 shows a state where a subject vehicle C and an oncoming vehicle A travel together at a speed of 60 km/h on a one-lane road having a width of 3.5 m and are present at positions corresponding to a headway time of 10 sec (about 170 m) between the subject vehicle C and the oncoming vehicle A.

Further, the pedestrians M1 and M2, who are waiting to cross the road, or small animals (not shown) are present at the shoulders 200 (5 m away from a center line CL) on the road shown in Fig. 16.

When the walking speed of the pedestrian M2 who intends to cross the road is 5 km/h (1.4 m/s) in this road condition, it takes about 7 sec for the pedestrian M2 to completely cross the road having the entire width of 10 m.

Furthermore, if 3 sec is required as an allowance time (risk avoidance time) until the pedestrian completely crosses the road, it takes about 10 sec for the pedestrian M2 to completely cross the road against a vehicle (the subject vehicle C in Fig. 16), which is present in a lane 202 distant from the pedestrian M2, as a time that is required for the pedestrian M2 to determine to cross the road.

Meanwhile, against a vehicle (the oncoming vehicle A in Fig. 16), which is present in a lane 201 close to the pedestrian M2, it takes about 5 sec for the pedestrian M2 to go over the center line CL if it is assumed that an allowance time is 2 sec slightly shorter than 3 sec in addition to 3 sec that is required for the pedestrian M2 to go over the center line CL.

Accordingly, if a headway time is 15 sec or less when vehicles (the oncoming vehicle A and the subject vehicle C) approaching the pedestrian are present on both the left and right sides of the pedestrian, it is considered that the pedestrian determines that it is not possible to cross the road and does not cross the road. Since a headway time between the subject vehicle C and the oncoming vehicle A is 10 sec as described above and is 15 sec or less, it is considered that a small animal rushes out. However, it is considered that the pedestrian M2 does not cross the road.

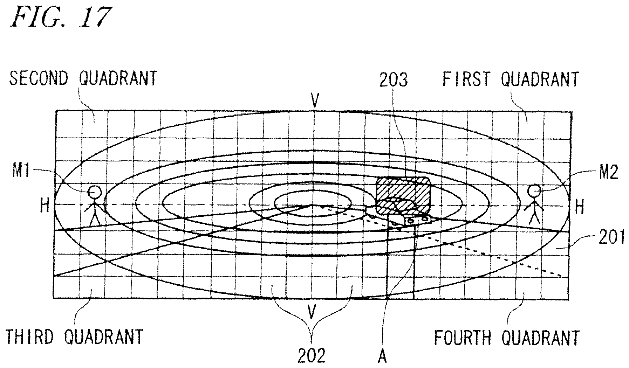

Considering the above-mentioned condition, when a distance between the subject vehicle C and the oncoming vehicle A is in a certain range, it is preferable that luminous flux emitted to the upper region above the cut-off line of the low beam (the first quadrant of the AZB shown in Fig. 17) in the opposite lane 201 be directed toward the fourth quadrant (a region of the travel lane 202 in the distance) or be used to recognize a pedestrian M1 close to the travel lane on the second quadrant and the third quadrant (below the cut-off line of a low beam) or the shape of the road.

A driver can visually recognize a small animal but it is difficult to avoid a small animal. In this regard, it is necessary to improve visibility even if only slightly, by increasing the amount of light irradiating the road surface (the second quadrant and the third quadrant).

Meanwhile, if the amount of light of the first quadrant (Fig. 17) is reduced when a headway time is sufficiently long (when the oncoming vehicle is present near a HV point of Fig. 17), the visibility to recognize a pedestrian in the opposite lane 201 deteriorates and becomes hazardous.

For example, when a subject vehicle C and an oncoming vehicle B travel together at a speed of 60 km/h and a headway time is 30 sec, a headway distance is about 1000 m. In this case, only a beam of a portion (hatching portion) 203 corresponding to the oncoming vehicle A in Fig. 17 is blocked (glare is suppressed) not to create glare. However, when a headway time between the subject vehicle and the oncoming vehicle is sufficiently long and it is expected that a person waiting to walk crosses the road, it is necessary to irradiate a person who is waiting to cross the road and is present close to (the first quadrant of) the oncoming vehicle.

### SUMMARY OF THE INVENTION

It is one of aspects of the invention to provide light distribution controller of a headlamp that prevents glare from affecting the driver of an oncoming vehicle by blocking a beam irradiating the oncoming vehicle through the control of forward light distribution and can make a driver watch a more important region by also controlling light distributed to a shoulder close to an oncoming vehicle according to a distance between a subject vehicle and the oncoming vehicle.

There is provided a light distribution controller for controlling a light distribution pattern which is formed by light emitted from a vehicle headlamp of a vehicle so as to prevent glare light from being directed to a front vehicle which exists in front of the vehicle and which is an oncoming vehicle traveling in an opposite lane opposite to a lane in which the vehicle is traveling, based on a relative distance between the vehicle and the front vehicle in a vehicle traveling direction. The light distribution controller is configured to control the light distribution pattern so as to block or reduce light directed to a first region where the front vehicle is present, when the relative distance is larger than a first value. The light distribution controller is configured to control the light distribution pattern so as to block or reduce light directed to a second region where the front vehicle is present and a third region which is located outside the front vehicle and closer to a road shoulder side, when the relative distance is in a range of a second value to the first value, wherein the second value is smaller than the first value. The light distribution controller is configured to control the light distribution pattern without blocking or reducing light directed to a fourth region where the front vehicle is present, when the relative distance is smaller than the second value.

Other aspects and advantages of the present invention will be apparent from the following description, the drawings and the claims.

### BRIEF DESCRIPTION OF THE DRAWINGS

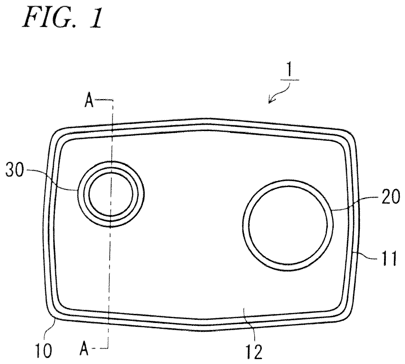

Fig. 1 is a view illustrating an example of an in-vehicle headlight unit that can be applied to a light distribution control system according to a first embodiment of the invention;

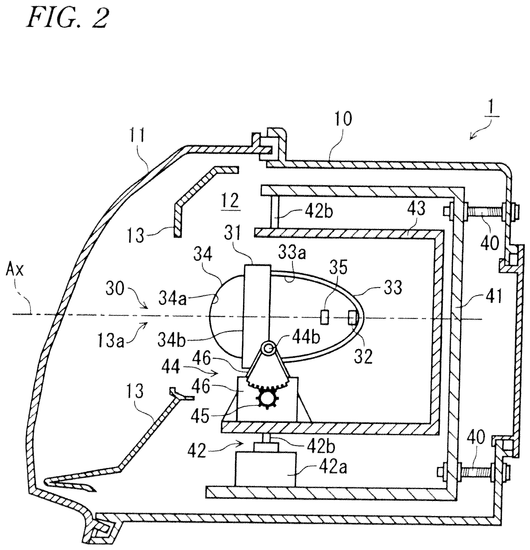

Fig. 2 is a cross-sectional view of the headlight unit taken along line A-A of Fig. 1;

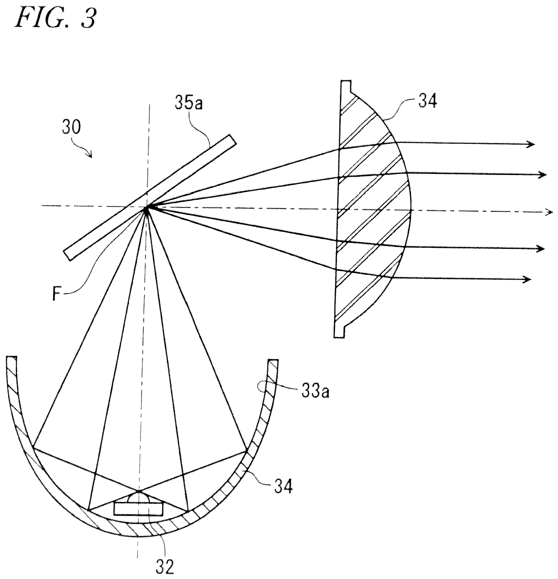

Fig. 3 is a view illustrating a sub-lamp unit of this embodiment that includes a light distribution control element;

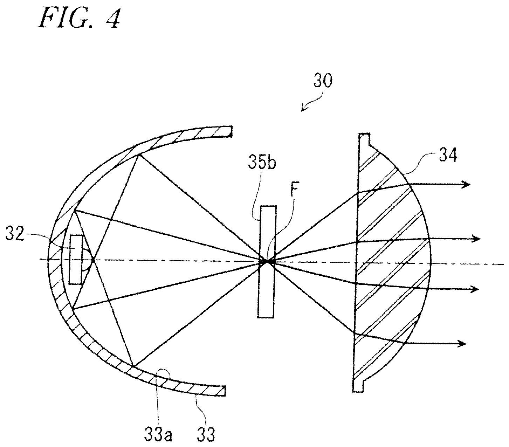

Fig. 4 is a view illustrating the sub-lamp unit of this embodiment that includes the light distribution control element;

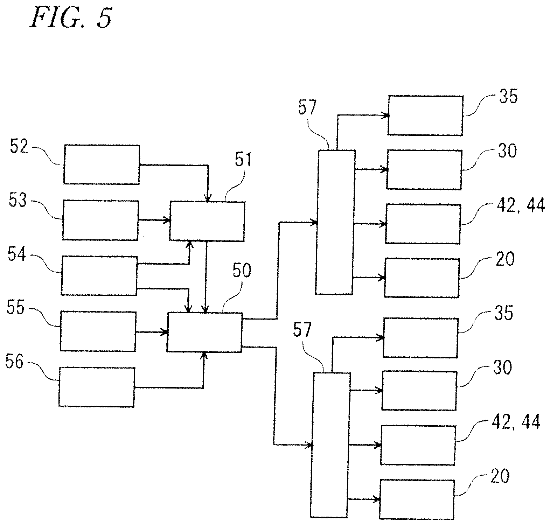

Fig. 5 is a block diagram illustrating the functional structure of the light distribution control system of the invention;

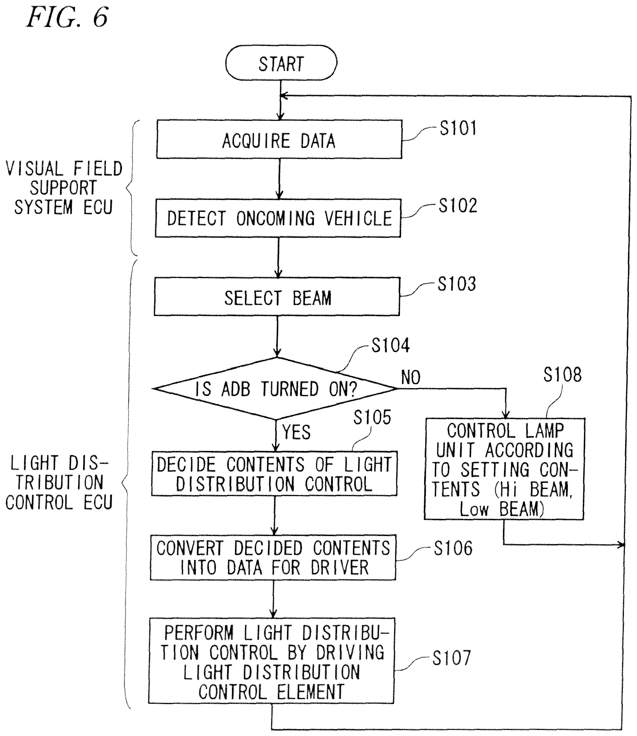

Fig. 6 is a flowchart illustrating the flow of processing of the light distribution control system of this embodiment.

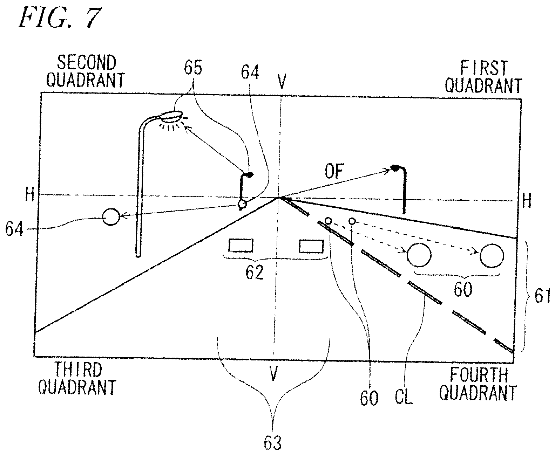

Fig. 7 is a schematic view showing objects that are present on a straight road;

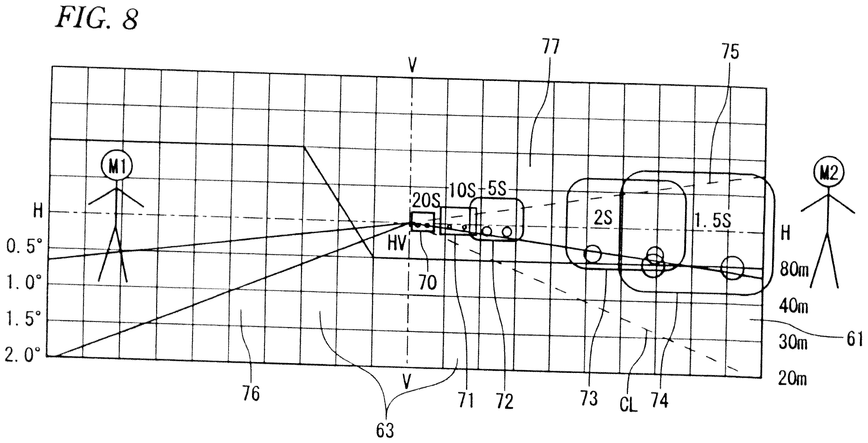

Fig. 8 is a view illustrating a relationship between the size and position of an oncoming vehicle on a screen in the first embodiment;

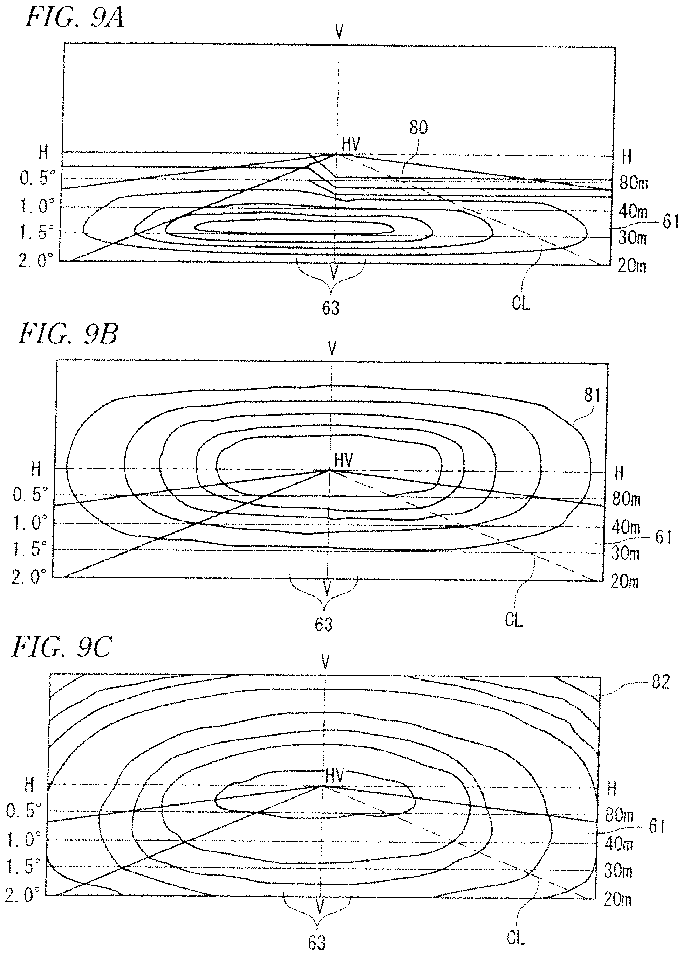

Figs. 9A to 9C are views showing examples of the light distribution of the light distribution control system of the first embodiment;

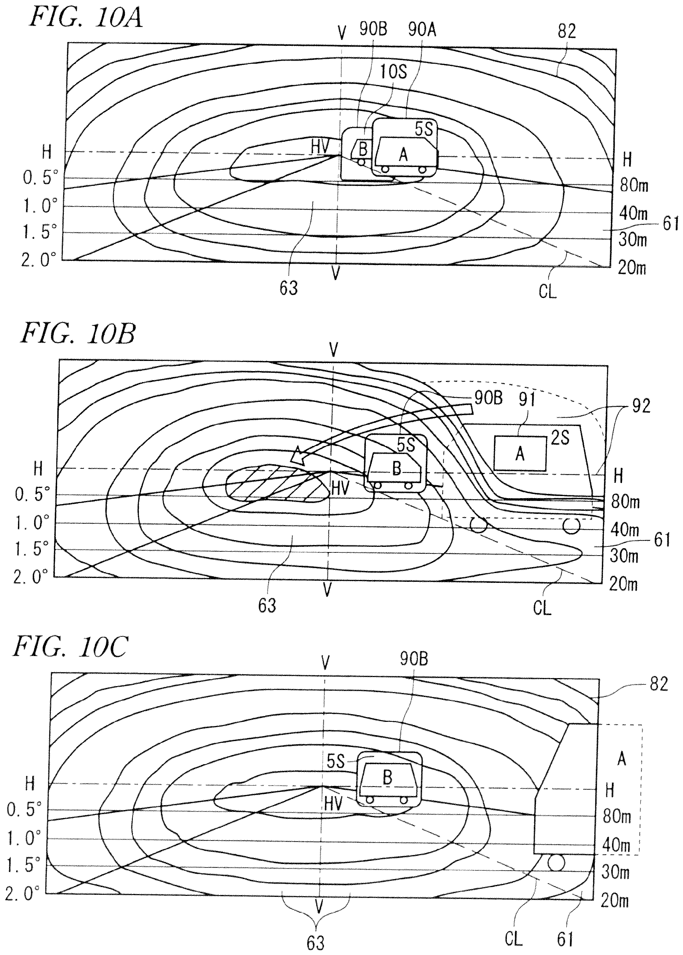

Figs. 10A to 10C are views showing examples of light distribution control of the first embodiment;

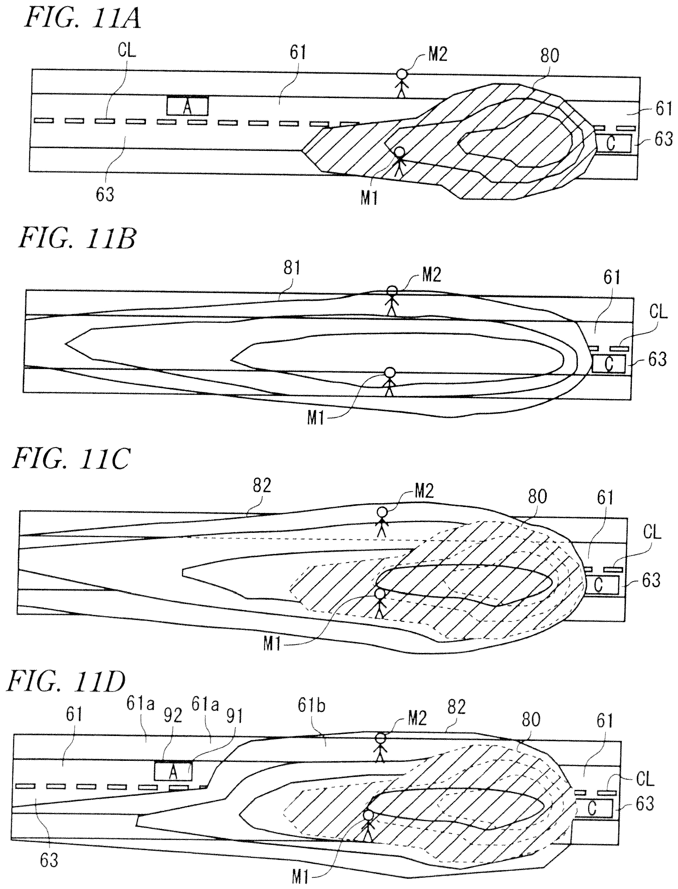

Figs. 11A to 11D are views showing the change of light distribution of the first embodiment by a road-surface light distribution pattern;

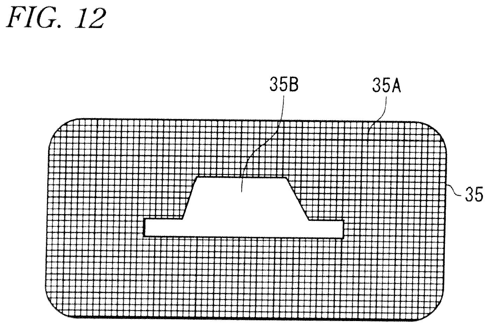

Fig. 12 is a schematic view illustrating light amount controller according to a second embodiment;

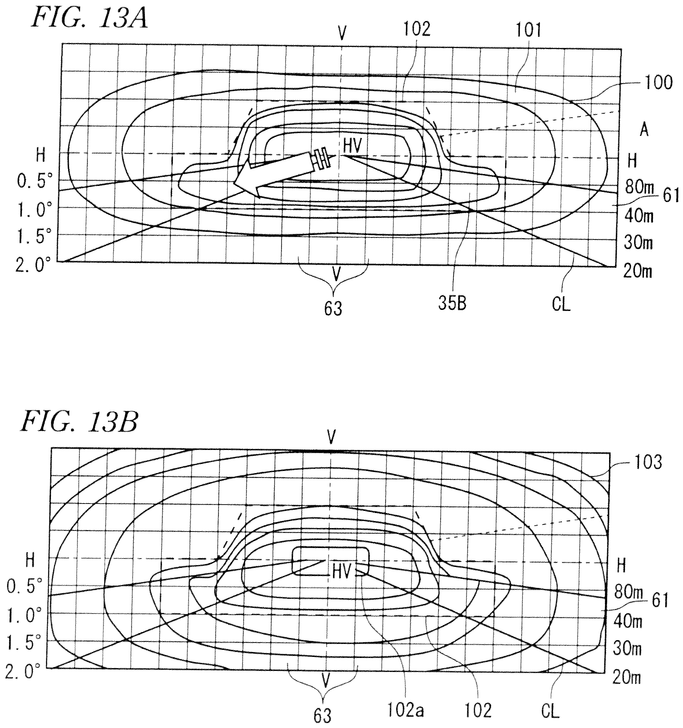

Figs. 13A and 13B are views illustrating a light distribution pattern of a light distribution control system of the second embodiment;

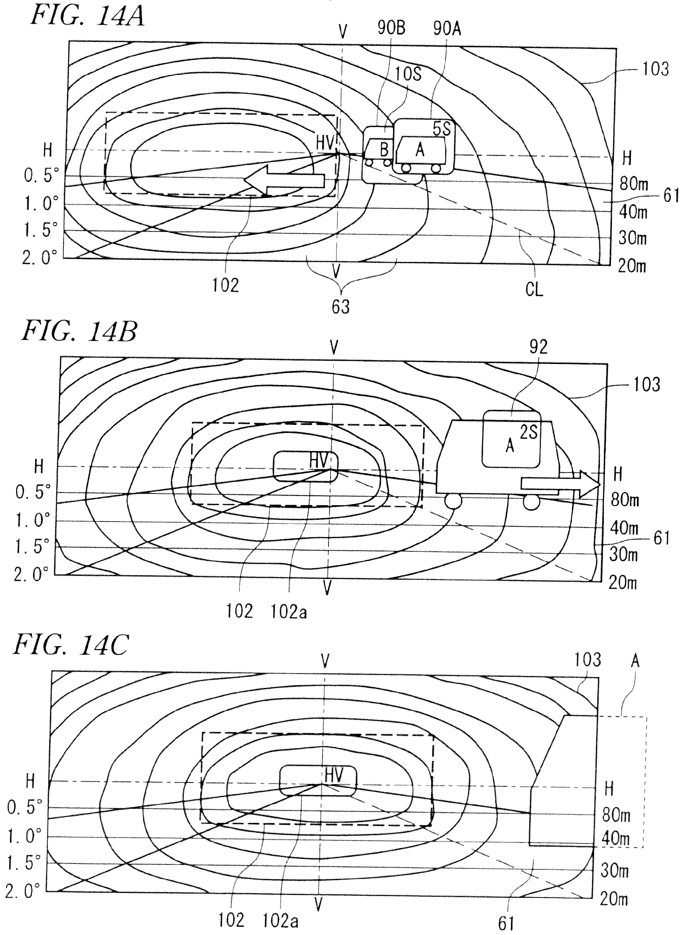

Figs. 14A to 14C are views showing examples of light distribution control of the second embodiment;

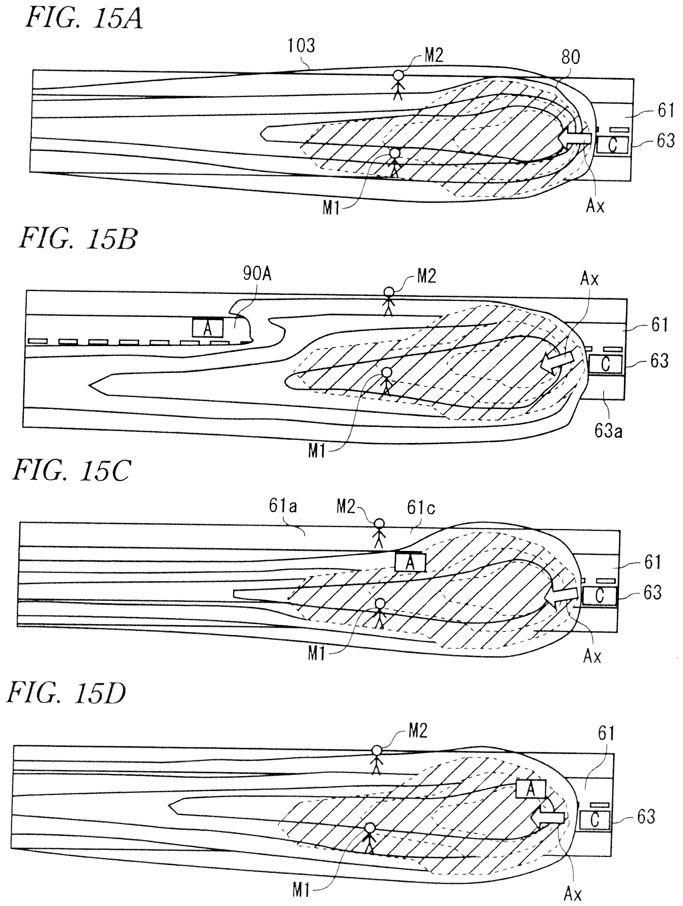

Figs. 15A to 15D are views showing the change of light distribution of the second embodiment by a road-surface light distribution pattern;
Fig. 16 is a view showing a road-surface irradiation image illustrating that a pedestrian crosses a road when a subject vehicle and an oncoming vehicle pass each other; and
Fig. 17 is a view, which shows a screen positioned ahead of a subject vehicle in the AZB technique, corresponding to Fig. 16.

### DETAILED DESCRIPTION

Hereinafter, the same or equivalent components, members, and signals, which are shown in the respective drawings, are denoted by the same reference numerals, and the repeated description thereof will be appropriately omitted. Further, some of members, which are not important in the description, will be omitted in the respective drawings.

Embodiments of the invention will be described in detail below with reference to the drawings.

### First embodiment

### (Structure of in-vehicle headlight unit)

Fig. 1 is a view illustrating an example of an in-vehicle headlight unit 1 (hereinafter, referred to as a headlight unit) that can be applied to a light distribution control system according to a first embodiment of the invention. Fig. 2 is a cross-sectional view of the headlight unit taken along line A-A of Fig. 1.

Meanwhile, the structure of the headlight unit I to be described below is merely illustrative and it goes without saying that other structures may be employed as a drive mechanism and the like of a lamp unit to be described below.

As shown in Fig. 1, the headlight unit 1 according to this embodiment includes a main lamp unit 20 and a projector type sub-lamp unit 30 that are disposed in a lamp chamber 12 formed by a lamp body 10 and a translucent cover 11. The main lamp unit 20 can secure the amount of light of main light distribution (main beam), and the projector type sub-lamp unit 30 can variably form a light distribution pattern while using a semiconductor light emitting element such as an LED (Light Emission Diode) as a light source.

Further, an extension 13 is disposed between the cover 11, the main lamp unit 20 and the sub-lamp unit 30 so as to cover a gap when the headlight unit is seen from the front side thereof. Opening portions 13a through which front end portions of the main lamp unit 20 and the sub-lamp unit 30 are exposed to the outside are formed at the extension 13.

Each of the main lamp unit 20 and the sub-lamp unit 30 has an optical axis Ax extending in the longitudinal direction of a vehicle, and is supported in the lamp body 10 so as to be capable of being tilted in the vertical and horizontal directions of the vehicle by aiming mechanisms 40 as shown in Fig. 2.

That is, a support member 41 is fixed to the lamp body 10 with the aiming mechanisms 40 interposed therebetween, and a horizontally changing mechanism (ACT: actuator) 42, which is a mechanical drive device horizontally changing the irradiation direction of the sub-lamp unit 30, is fixed to the support member 41.

The horizontally changing mechanism 42 is a swivel mechanism of which a drive source 42a oscillates and rotates a unit mounting member 43 around a vertical axis about a swivel rotating shaft 42b.

The swivel rotating shaft 42b is connected to an output shaft of the drive source 42a of the horizontally changing mechanism 42 that is fixed to the horizontal portion of the support member 41. Accordingly, when the drive source 42a is driven and the output shaft is rotated, the unit mounting member 43 is rotationally driven about the swivel rotating shaft 42b.

Further, a vertically changing mechanism (actuator) 44, which vertically changes the irradiation direction of the sub-lamp unit 30, is fixed to the unit mounting member 43.

The vertically changing mechanism 44 is a leveling mechanism of which a drive source 44a can drive a base member to level up and down the base member around a horizontal axis about a vertically unit rotating shaft 44b.

A pinion gear 45 is fixed to an output shaft of the drive source 44a that is disposed at the horizontal portion of the unit mounting member 43, and the pinion gear 45 meshes with a fan-shaped gear 46 that is fixed to the vertically unit rotating shaft 44b.

When the drive source 44a is driven and the output shaft is rotated, the vertically unit rotating shaft 44b is rotated through the pinion gear 45 and the fan-shaped gear 46. Accordingly, the base member 31 is oscillated and rotated about the vertically unit rotating shaft 44b.

Further, the sub-lamp unit 30 includes a semiconductor light emitting element (hereinafter, referred to as a light source) 32 as a light source, a reflector 33, and a projection lens 34.

The reflector 33 includes a reflective surface 33a reflecting the light, which is emitted from the light source 32, forward toward the optical axis Ax. The reflective surface 33a has a substantially elliptical cross-sectional shape, and the eccentricity of the reflective surface is set to be gradually increased from a vertical cross-section to a horizontal cross-section.

Accordingly, the light, which is emitted from the light source 32 and reflected by the reflective surface 33a, is substantially focused on the vicinity of a rear focus F of the projection lens 34 in the vertical cross-section.

The projection lens 34 is formed of a piano-convex lens of which a front surface 34a has the shape of a convex curved surface and a rear surface 34b is a float surface, and is disposed on the optical axis Ax. Further, the projection lens 34 projects an image, which is formed on a focal plane including the rear focus F, forward as an inverted image.

A convex curved surface, which forms the front surface 34a of the projection lens 34, is formed of an aspheric surface that is formed so as to position the rear focus F of the projection lens 34 on the optical axis Ax.

Moreover, the sub-lamp unit 30 of this embodiment further includes a matrix-shaped light distribution control element (light control electronic member) 35 that is disposed near the focus F on the optical path between the light source 32 and the projection lens 34, forms a characteristic additional light distribution pattern of the invention by controlling the amount of luminous flux emitted from the light source 32, and realizes the above-mentioned AZB.

Meanwhile, since the main lamp unit 20 also has the same structure as the structure of the sub-lamp unit 30 except for the light distribution control element 35, the main lamp unit 20 can change the irradiation direction of light in accordance with the traveling direction of a vehicle by a vertically changing mechanism and a horizontally changing mechanism.

### (Structure of light distribution control element)

Figs. 3 and 4 are views illustrating the sub-lamp unit of this embodiment that includes the light distribution control element.

Meanwhile, a technique, which can change a light distribution pattern by controlling the amount of light/light distribution for each zone on a front screen with, particularly, MEMS (Micro Electro Mechanical System) (Fig. 3) or a liquid crystal system (Fig. 4) among the ADB (Adaptive Driving Beam) that changes a light distribution pattern according to the presence/absence or position of a forward vehicle, is employed in the sub-lamp unit 30 of this embodiment as described above.

A MEMS element 35a shown in Fig. 3 is an element controlling the amount of reflected light of a beam emitted from the light source 32 by changing angles of the respective optical elements, which are disposed in a matrix, with respect to the optical axis. Further, a liquid crystal element 35b shown in Fig. 4 is an element that controls the amount of transmitted light of a beam, which is emitted from the light source 32, at the respective liquid crystal elements (light control positions), which are disposed in a matrix.

When these light amount control elements 35 are used as a light distribution control element, it is possible to form different additional light distribution patterns by controlling the amount of luminous flux emitted from the projection lens 34.

Furthermore, AZB is also characterized in that glare directed at an oncoming vehicle is prevented by the blocking/reducing of a beam irradiating a region where an oncoming vehicle ahead of a subject vehicle is present.

### (Structure of light distribution control system)

Fig. 5 is a block diagram illustrating the functional structure of the light distribution control system that forms different light distribution patterns by controlling an in-vehicle headlight device of the invention.

The light distribution control system according to this embodiment includes a visual field support system ECU 51 and a characteristic light distribution control ECU (light distribution controller) 50 of the invention. The visual field support system ECU 51 performs image processing of image data acquired by an in-vehicle camera 52 that is mounted on a vehicle in position; calculates data necessary for various existing visual field support systems (ADB, a precrash safety system, a LDWS (Lane Departure Warning System, and the like) mounted on the vehicle, and sends signals to various in-vehicle devices through an in-vehicle LAN or the like. The light distribution control ECU 50 decides light distribution corresponding to the traveling scene of bright objects on the road on the basis of properties (oncoming vehicles, preceding vehicles, reflectors, and road illuminations) of the bright objects on the road sent from the visual field support system ECU 51, the (front and lateral) positions of the bright objects, and vehicle speed obtained from a vehicle speed sensor 53; decides drive control variables (the moving distance of a beam in the vertical and horizontal directions, the position and range of a portion where light is blocked, the control and return thereof, and the like) of a light distribution variable lamp (sub-lamp unit 30) required to realize the light distribution; decides the control variables and control contents of the light distribution control element 35 and the actuators (ACT; mechanical drive devices) 42 and 44 that are specific realizing means described in Fig. 2.

Each of the light distribution control ECU 50 and the visual field support system ECU 51 includes a CPU (Central Processing Unit) that performs various kinds of calculation processing, a ROM (Read Only Memory) that stores various control programs, a RAM (Random Access Memory) that functions as a work area where control programs or data are developed and processed by the CPU, and the like.

The in-vehicle camera 52 is an electro-optical camera that uses a CCD (Charge Coupled Device), a CMOS (Complementary Metal Oxide Semiconductor), or the like. Further, the in-vehicle camera 52 may be a stereo (compound-eye) camera that uses a plurality of CCDs or CMOSs.

The image data acquired by the in-vehicle camera 52 are processed and analyzed by the visual field support system ECU 51.

The vehicle speed sensor 53 is a sensor that sends vehicle speed data of a subject vehicle to various in-vehicle devices through the in-vehicle LAN.

Further, the system of Fig. 5 includes a radar 54, a steering angle sensor or a GPS navigation 55, and a HL switch 56.

The radar 54 is a laser radar or a millimeter wave radar, and measures a headway distance (relative distance) between an oncoming vehicle and the subject vehicle by measuring the arrival time of a wave reflected from a reflective object (oncoming vehicle).

Furthermore, it is possible to measure the relative speed between the subject vehicle and the oncoming vehicle on the basis of the temporal change of the measured headway distance and the vehicle speed data of the subject vehicle obtained by the vehicle speed sensor 53.

The steering angle sensor or the GPS navigation 55 is a sensor that determines whether or not the subject vehicle travels on a curved road, measures the curvature of a curve, or the like. The steering angle sensor is a sensor for the rotation angle of a steering wheel, and the GPS navigation performs the same measurement as described above from the map data of a car navigation. A combination of these devices may be used. Information obtained from these devices is sent to various in-vehicle devices.

In the existing ADB technique, the light distribution control ECU 50 horizontally swivels the horizontal irradiation direction of the sub-lamp unit 30 as a light distribution variable lamp in accordance with the curve on the basis of information obtained from these devices.

The HL switch 56 sends the On/Off of the headlight or the control mode of a beam (the On/Off of an ADB or the like) to the various in-vehicle devices through the in-vehicle LAN or the like.

That is, a fixed beam (low beam) generated from the main lamp unit 20 of which light distribution is invariable and which has diffused light distribution below a H-H line (cut-off line) is turned on according to an ON-instruction that makes the HL switch be turned on.

Further, the sub-lamp unit 30 interlocks with an AUTO beam SW or a high beam SW so that the light distribution of the sub-lamp unit 30 is controlled according to the presence state of a forward vehicle, a curved road, and the like.

A driver 57 converts the control variables and control contents from the light distribution control ECU 50 into instructions corresponding to the operations of the actuators 42 and 44 or the light distribution control element 35, and controls those.

### (Processing of image data performed by visual field support system ECU)

The visual field support system ECU 51 processes and analyzes the image data acquired by the in-vehicle camera 52 as described below.
(1) First, the visual field support system ECU 51 detects LMs (lane marks; compartment lines) and the brightness of various objects in a forward visual field by processing or analyzing the image data that are acquired by the in-vehicle camera 52.
(2) Next, the visual field support system ECU 51 acquires the shape of the road or the number of lanes on the basis of the information about the detected lane marks; calculates the information about the colors of bright objects (in the case of a color camera), the properties of the bright objects (white light of headlamp (oncoming vehicle) / red light of tail lamps (preceding vehicle)), or the light emitting area of the bright objects, and the information about the positions of the bright objects on the road; and stores the information in the RAM.
(3) Further, the visual field support system ECU 51 decides the properties of the bright objects (an oncoming vehicle, a preceding vehicle, reflectors in the facilities installed on the road, and the like), the speed of an oncoming vehicle, and the like on the basis of data, such as the amount of OF (optical flow) and the positions of the bright objects between the frames of taken images. Meanwhile, if the in-vehicle camera 52 is a monocular camera, detection accuracy on a distance is low. However, if a stereo camera is used as the in-vehicle camera 52, it is possible to improve accuracy.

Furthermore, since detection accuracy on a distance is low when the in-vehicle camera 52 is a monocular camera, it is preferable to compensate with distance information, which is obtained by the inter-vehicle distance radar 54, in order to compensate for low detection accuracy.

Fig. 6 is a flowchart illustrating the flow of processing of the light distribution control system of this embodiment.

The visual field support system ECU 51 acquires data, such as image data in the forward visual field and the speed of the subject vehicle, from the in-vehicle camera 52, the vehicle speed sensor 53, and the like (Step S101).

Next, the visual field support system ECU 51 performs processing for detecting an oncoming vehicle on the basis of the image data acquired from the in-vehicle camera 52 (Step S102). The calculation of the position of the oncoming vehicle, the speed of the oncoming vehicle, the relative distance between the subject vehicle and the oncoming vehicle, and the like is also included in this processing.

The light distribution control ECU 50 determines which beam of an ADB, a Hi beam, and a Low beam is selected by the above-mentioned AUTO beam SW or the above-mentioned high beam SW (Step S103). If the ADB is turned on (Yes in Step S104), the light distribution control ECU 50 decides the contents of light distribution control (the driving direction and driving amount of the sub-lamp unit 30) on the basis of the information about the oncoming vehicle obtained in Step S102 (Step S105).

Further, the light distribution control ECU 50 performs processing for converting the decided contents of light distribution control into data for the driver 57 (Step S106), and performs the light distribution control of the invention by driving the light distribution control element 35 (Step S107).

Meanwhile, if the ADB is not turned on (No in Step S104), the light distribution control ECU 50 controls the lamp unit according to the setting result so that a Hi beam or a Low beam is formed (Step S108).

Image analysis processing performed by the visual field support system ECU 51 will be described in more detail with reference to Fig. 7.

Fig. 7 is a schematic view showing objects, which are present on a straight road, on a screen, and illustrates a case that vehicles should keep to the left as in a country such as Japan.

An object, which is positioned at the infinitely distant point on a straight road, corresponds to the position of a vanishing point (a HV point on the screen), and objects, which are positioned at finite distances, are radially present from the vanishing point.

In the case of the straight road, headlights (white light) 60 of an oncoming vehicle are present in the opposite lane 61 of the fourth quadrant below a horizontal line (H-H line).

Taillights (red light) 62 of a forward vehicle on a travel lane are present in the travel lane 63 below the H-H line (the third and fourth quadrants).

Delineators (reflectors) (white light or orange light) 64 mounted on a guardrail are present near the H-H line.

Further, road illuminations (white light or pale yellow light) 65 are present in the region above the H-H line.

Objects, which move on the screen while the subject vehicle travels, move on the radial lines extending from the HV point. Accordingly, when the image of the road surface in front of the subject vehicle is continuously taken by the in-vehicle camera 52 while the subject vehicle travels, a moving distance (which is called OF; optical flow) of the object on the road between frames is small in the case of an object distant from the subject vehicle and is large in the case of an object close to the subject vehicle.

Although having been described in Fig. 5, it is possible to determine the properties (headlamps, tail lamps, or road illuminations) of the objects, which are present on the road, on the basis of the color of the light, the brightness, or the amount of OF of the bright objects.

Meanwhile, reference numerals 63 and 61 of the travel lane and the opposite lane in Fig. 7 are also successively used in the drawings that are used in the following description.

Fig. 8 is a view illustrating a relationship between the size and position of an oncoming vehicle on a screen positioned ahead of a vehicle. Meanwhile, Fig. 8 is drawn while a lamp is set as a point of sight, and illustrates a case that vehicles should keep to the left as in Fig. 7.

Fig. 8 shows the travel lane (passing lane) and both lanes (the traveling lane and the opposite lane) of the travel lane and the trajectory of the eyes of the driver of the oncoming vehicle when the width of a lane is set to 3.5 m, the position of driver's eyes is set to a ground height of 1.5 m and 3.5 m on the right side, and the ground height of the headlamp is set to 0.7 m.

In Fig. 8, rectangles denoted by reference numerals 70 to 74 show the front sizes of oncoming vehicles on the screen positioned ahead of a vehicle and a line 75 passing through the rectangles 70 to 74 represents the trajectory of the eyes of the drivers of the oncoming vehicles.

Meanwhile, pedestrians M1 and M2 are present about 50 m ahead of the subject vehicle at shoulders of the travel lane and the opposite lane, respectively.

Fig. 8 shows a screen when a sensor is installed at the center of the travel lane, and 1 grid-square in the coordinate system is 0.5°.

In such a geometrical arrangement, when each of the speeds of the subject vehicle and the oncoming vehicles is set to 60 km/h, the size of the oncoming vehicle and the positions (a ground height of 1.2 m) of eyes of the drivers of the oncoming vehicle present at points corresponding to relative distances when a headway time between the subject vehicle and the oncoming vehicle is 20, 10, 5, 2, and 1.5 sec on a screen are as follows.

Meanwhile, the front size of the vehicle is 1.5 m in the vertical direction (V-V line) and W2.0 m in the horizontal direction (H-H line).

When a headway time is 20 sec (a relative distance is about 660 m), the visual angle size of the oncoming vehicle, which is represented by the rectangle 70, on the screen is V(vertical direction)0.13° × H(horizontal direction)0.17° / U0.04°R0.30°.

When a headway time is 10 sec (a relative distance is about 330 m), the visual angle size of the oncoming vehicle, which is represented by the rectangle 71, on the screen is V0.26° × H0.35° / U0.08°R0.6°.

When a headway time is 5 sec (a relative distance is about 165 m), the visual angle size of the oncoming vehicle, which is represented by the rectangle 72, on the screen is V0.52° × H0.69° / U0.17°R1.22°.

Further, when a headway time is 2 sec (a relative distance is about 66 m), the visual angle size of the oncoming vehicle, which is represented by the rectangle 73, on the screen is V1.30° × H1.74° / U0.43°R3.04°.

Furthermore, when a headway time is 1.5 sec (a relative distance is about 50 m), the visual angle size of the oncoming vehicle is V1.71° × H2.29° / U0.57°R4.00°.

In the state where the oncoming vehicle is present on this road, the oncoming vehicles (rectangles 70 and 71) present of which a headway time is 5 sec or more and which are present on the front have a very small visual angle size of 0.5° or less (0.2° in the case of a headway time of 20 sec) and become close to the HV point.

Further, it is found that the visual angle size of an oncoming vehicle is rapidly increased at a short distance where a headway time is within 5 sec and the oncoming vehicle is distant from the HV point. Accordingly, if a headway time and a relative vehicle speed are known, it is necessary to change a light-blocking size according to the headway time (relative distance).

Further, although having been described in Fig. 7, OF (optical flow) is small in the case of a vehicle distant from the subject vehicle and is large in the case of a vehicle close to the subject vehicle.

Accordingly, since OF of an oncoming vehicle in the distance is small although depending on the resolution of the in-vehicle camera 52, it is difficult to discriminate the oncoming vehicle and it is also difficult to discriminate an oncoming vehicle, which is present in the distance, from the road illuminations 65 (Fig. 7) and the shoulder reflectors (delineators) 64 (Fig. 7).

A region 76 is a region where the amount of light is to be increased when an oncoming vehicle is present. When an oncoming vehicle is present, a range, which is important in visually recognizing a pedestrian or a small animal present on the opposite lane, is positioned 20 m (2°) to 80 m (0.5°) ahead of a subject vehicle.

When a subject vehicle is traveling at a speed of 60 km/h, a relative distance of 20 m corresponds to 1.2 sec ahead and 1.2 sec is a substantially marginal time that is taken to visually recognize and avoid an object to be recognized.

80 m corresponds to about 5 sec ahead. If an object, which is to be recognized and is positioned 80 m ahead, can be visually recognized, it is sufficiently safe in terms of traveling at a speed of 60 km/h.

Meanwhile, this region 76 is also a region that is to be mainly irradiated with fixed light distribution (which is a base beam always generated during the turning-on of a headlamp SW and substantially corresponds to the current low beam) generated from the main lamp unit 20.

In contrast, a region 77 shown in Fig. 8 is a range where the amount of light is to be improved according to the change of a headway time between the subject vehicle and an oncoming vehicle.

In order to illuminate a position that is more distant from the subject vehicle than 80 m, it is necessary to illuminate the region (a portion that includes a portion above the H-H line and is close to the H-H line) 77. The region 77 is important in visually recognizing a pedestrian or the like who crosses the road from the rear side of the oncoming vehicle. Accordingly, it is important to interlock with the change of the position of an oncoming vehicle so that an illumination range is enlarged toward the opposite lane.

Figs. 9A to 9C are views showing examples of the light distribution of the light distribution control system of this embodiment.

Fig. 9A shows a base beam 80 having the form of a low beam generated from the main beam unit (fixed light distribution lamp) 20, and this is a lamp that is always turned on during the turning-on of the headlight.

Base light distribution, where a beam is diffused below the horizontal line (H-H line) like the current low beam, is formed by an appropriate optical system (not shown). When there are many vehicles, such as preceding vehicles or oncoming vehicles, in the forward visual field, when the speed of a subject vehicle is a slow driving level, or when a vehicle cannot be detected or can be detected with low reliability by a sensor (in-vehicle camera) due to the mixing of not only forward vehicles but also store illuminations or road illuminations, it is preferable that the subject vehicle travel with only this fixed beam.

Since the base beam 80 has a boundary between light and darkness near the horizontal line (H-H line) and suppresses light above the horizontal line in the opposite lane, glare (glare) is not given to (drivers of) oncoming vehicles by only the fixed light distribution.

Fig. 9B shows a whole surface matrix beam 81 as an additional beam generated from the sub-lamp unit (variable light distribution lamp) 30 of this embodiment.

Further, Fig. 9C shows a travel beam 82 of this embodiment that is obtained by combining the base beam 80 of Fig. 9A with the whole surface matrix beam 81 of Fig. 9B.

In this embodiment, when a subject vehicle and an oncoming vehicle pass each other, a light distribution pattern, which prevents glare to an oncoming vehicle, is formed by blocking/reducing the travel beam 82 through the control of the component of the additional beam (additional light distribution pattern) of Fig. 9B that is included in the combined travel beam 82 shown in Fig. 9C.

Meanwhile, when capability for detecting a vehicle by the sensor (in-vehicle camera) is sufficient, this can be performed. When capability for detecting a vehicle by the sensor is not sufficient, the subject vehicle travels with only the fixed beam generated from the main lamp unit 20.

### (Light-blocking size of oncoming vehicle)

Only a portion of the matrix beam, which corresponds to an oncoming vehicle, is blocked or reduced. However, a control for blocking light in a range including a pair of lights (headlamps) is basically performed as for the light-blocking size of the oncoming vehicle.

An interval between the mounted headlamps depends on the size of a vehicle, but is generally in the range of 1.6 m to 2.0 m. The interval also depends on the headway distance, but it is considered appropriate that the interval is in the range of 1.2 to 1.5 times including this range.

When an oncoming vehicle is present in the distance, the minimum light-blocking size is about 1.0° even in the case of the minimum visual angle size, considering the accuracy of the measurement of the position of the oncoming vehicle or the error of processing time, the vertical movement (0.2 to 0.5°) of a vehicle caused by the irregularity of a road surface or acceleration and deceleration, and the size of a segment image of an electronic control element. The same size in the vertical direction is also referred to as a light-blocking range.

Light may also be blocked for a preceding vehicle in the same way as described above.

Further, although described below, only a portion of light corresponding to the oncoming vehicle is blocked when an oncoming vehicle is detected or when a headway time between the subject vehicle and an oncoming vehicle is equal to or longer than a first headway time.

Furthermore, when a headway time between the subject vehicle and an oncoming vehicle is shorter than a second headway time and the oncoming vehicle becomes closest to the subject vehicle, a beam is made to return to an initial state (a state where there is no oncoming vehicle and a beam is not blocked).

When a state where the oncoming vehicle is close to the subject vehicle is between the first headway time and the second headway time, the lateral position of the oncoming vehicle positioned at the position of the second headway time becomes an illumination limit (the side of the oncoming vehicle facing the opposite lane is not illuminated) and the light irradiating the oncoming vehicle more distant than the position of the second headway time is blocked.

The luminous flux, which is directed at the upper or lateral side of the oncoming vehicle of the second headway time, is controlled so as to be reduced or directed at the travel lane.

Meanwhile, the performance for detecting a pedestrian or an inter-vehicle distance at night is reduced as the speed of a subject vehicle is increased. Accordingly, it is possible to set the first headway time, where an oncoming vehicle is detected and light starts to be blocked, to a short time as the speed of a subject vehicle is increased. The same is also applied in the case of the second headway time.

When the light distribution of the ADB is controlled with a factor, such as a headway time or an inter-vehicle distance as described above, it is possible to effectively illuminate a position required for visual recognition while suppressing glare directed at an oncoming vehicle.

Meanwhile, first and second inter-vehicle distances or a headway time is adjusted by the speed of a vehicle. For example, the first and second inter-vehicle distances or a headway time is adjusted so as to be reduced as the speed of a vehicle is increased.

Specific values of the first and second headway times will be described.

If a headway time is 10 sec or more when the subject vehicle and the oncoming vehicle pass each other at a speed of 60 km/h as described above with reference to Fig. 8, the oncoming vehicle becomes close to the subject vehicle from the HV point by 0.5° and the visual angle size of the oncoming vehicle is also very small (0.5° or less). Under the condition of a very small size, it is difficult not only to discriminate the oncoming vehicle but also to discriminate other bright objects. When a headway time is 10 sec or more, it is difficult to finely control light distribution. Accordingly, in consideration of a problem in the detection performed by the in-vehicle camera, the first headway time (corresponding to a first predetermined value of a relative distance) is set to 5 sec and the second headway time (corresponding to a second predetermined value of a relative distance) is set to 1.0 sec.

Figs. 10A to 10C are views showing examples of light distribution control of this embodiment, and shows that a combined light distribution pattern 82 including light blocking is changed as a distance between an oncoming vehicle and a subject vehicle is changed.

Figs. 10A to 10C show an example of a case that a plurality of oncoming vehicles (an oncoming vehicle A and an oncoming vehicle B) travels on the opposite lane of a straight road.

Fig. 10A shows an example of light blocking when all the oncoming vehicles are present at a relative distance that is equal to or larger than the first predetermined value. The relative distance, which has the first predetermined value as described above, corresponds to a headway time of 5 sec.

In Fig. 10A, the oncoming vehicle A is present at a position 5 sec ahead of the subject vehicle and the oncoming vehicle B is present at a position 10 sec ahead of the subject vehicle. Accordingly, both the oncoming vehicles also travel at the positions where the relative distance between the oncoming vehicle and the subject vehicle is equal to or larger than the first predetermined value.

In this case, the light distribution control ECU 50 controls the light distribution control element 35 so that light is individually blocked for the oncoming vehicles A and B.

Regions where light is blocked are regions 90A and 90B corresponding to the range of ±0.5° from the detected positions of the oncoming vehicles, respectively. Accordingly, it is possible to reduce glare directed at the oncoming vehicles A and B and to improve safety.

Fig. 10B shows an example of light blocking when the oncoming vehicles A and B are present at a relative distance that is equal to or larger than the second predetermined value. The second predetermined value corresponds to a headway time of 1 sec as described above.

In Fig. 10B, the oncoming vehicle A is present at a position where a headway time between the subject vehicle and the oncoming vehicle is 2 sec and the oncoming vehicle B is present at a position where a headway time between the subject vehicle and the oncoming vehicle is 5 sec. Accordingly, the oncoming vehicle A travels at the position where the relative distance between the oncoming vehicle and the subject vehicle is equal to or larger than the second predetermined value and smaller than the first predetermined value.

In this case, the light distribution control ECU 50 controls the light distribution control element 35 so that light is blocked in a region 92 extending over substantially the entire size of the oncoming vehicle A as for the oncoming vehicle A and light is blocked in a region 90B corresponding to the range of ±0.5° like the case of Fig. 10A as for the oncoming vehicle B that is present at the position where a headway time between the subject vehicle and the oncoming vehicle is 5 sec.

When the oncoming vehicle becomes close to the subject vehicle up to a distance where a headway time is 2 sec like the oncoming vehicle A of Fig. 10B, the light-blocking size of the oncoming vehicle is increased (and becomes the size of the oncoming vehicle) and there is no meaning in the illumination of the outside of the oncoming vehicle.

Accordingly, the light distribution control ECU 50 illuminates the road surface of the travel lane 63 (and restricts the irradiation of the region corresponding to the oncoming vehicle A and the region closer to the opposite lane than the oncoming vehicle A) by moving (distributing) the luminous flux of a range 91, where light is to be blocked, of the oncoming vehicle A, which is closest to the subject vehicle and the outer region 92 of the range 91, toward the travel lane (this is applied only when a MEMS element is used as the light distribution control element 35, and only the reduction of light can be performed when liquid crystal is used as the light distribution control element).

When a MEMS element is used as the light distribution control element 35 (luminous flux is distributed again) as described above, the visibility of the travel lane is improved.

In the case of liquid crystal, light is merely reduced in the range 91 where light is to be blocked, of the oncoming vehicle A and the outer region 92 of the range 91 and cannot be visually recognized essentially due to glare of the oncoming vehicle even if being illuminated. However, since the range, which is meaninglessly illuminated, is reduced, a driver unconsciously watches the travel lane. Accordingly, it is possible to improve the visibility of a pedestrian or an obstacle that is present on the travel lane.

Fig. 10C is a view showing an example of light blocking when the oncoming vehicle A closest to the subject vehicle deviates to a relative distance smaller than the second predetermined value.

When the oncoming vehicle becomes close to the subject vehicle at a distance shorter than a headway distance corresponding to 1 sec, the position of the oncoming vehicle on the screen is significantly distant from the HV point. For this reason, the amount of irradiation light of the headlamp is reduced and irradiation time is reduced. As a result, there is no problem of glare.

Immediately after the oncoming vehicle closest to the subject vehicle reaches a relative distance having the second predetermined value, the sub-lamp unit 30 is controlled so that the blocking of light on a vehicle close to the subject vehicle is stopped (a beam is made to return to the light distribution corresponding to a case that there is no oncoming vehicle). In this way, it is possible to reduce time, which is required to detect a pedestrian and the like on the road, as compared to a case that a beam is made to return after vehicles pass each other.

Further, when an oncoming vehicle becomes close to the subject vehicle at a sufficiently short distance like when an oncoming vehicle is present at the distance (30 m) corresponding to a headway time of 1.0 sec, exposure to glare occurs for a short time and there is no safety problem. For this reason, the blocking of light on the oncoming vehicle is stopped.

When the oncoming vehicle becomes close to the subject vehicle until a headway time becomes 1 sec, an inter-vehicle distance is about 17 m, which is the lateral position corresponding to about 6° from the headlamp. Accordingly, the amount of glare light is reduced.

Moreover, since a glare exposure time of 1.0 sec until the oncoming vehicle and the subject vehicle pass each other is a very short time, the influence of glare on visibility is small. It is considered that light distribution may be adjusted (the blocking of light may be stopped) so as to recover visibility in the distance when the oncoming vehicle is close to the subject vehicle immediately before the oncoming vehicle and the subject vehicle pass each other as described above.

Meanwhile, in Fig. 10C, the oncoming vehicle B is still present at the position corresponding to a headway time of 5 sec from the subject vehicle A. Accordingly, as for the oncoming vehicle B, a beam is not made to return and light continues to be blocked in the region 90B.

Figs. 11A to 11D are views showing the change of light distribution of this embodiment by a road-surface light distribution pattern.

Fig. 11A shows a road-surface light distribution pattern that is formed by only fixed light distribution (base beam) 80, and this road-surface light distribution pattern shown in Fig. 11A corresponds to a low beam shown in Fig. 9A. A driver can visually recognize a pedestrian on the travel lane 63, but cannot visually recognize a pedestrian in the opposite lane 61.

Fig. 11B shows a road-surface light distribution pattern that is formed by only a matrix beam (variable light distribution) 81. This road-surface light distribution pattern shown in Fig. 11B corresponds to a beam shown in Fig. 9B, and forms light distribution that allows a driver to visually recognize the presence of pedestrians M1 and M2 present on the shoulders of the opposite lane 61 and the travel lane 63. Further, since the relative distance between the oncoming vehicle and the subject vehicle is sufficiently short in Fig. 11B, a pedestrian cannot cross the road.

Fig. 11C shows travel beam road surface light distribution that is obtained by Combining the fixed light distribution of Fig. 11A with the variable light distribution of Fig. 11B, and this travel beam road surface light distribution corresponds to the beam shown in Fig. 9C. Meanwhile, since no oncoming vehicle is present in this case, a light-blocking region is not formed in a light distribution pattern. Moreover, the travel beam road surface light distribution is light distribution that allows a driver to visually recognize the presence of pedestrians present on the shoulders of the opposite lane 61 and the travel lane 63. Further, since the relative distance between the oncoming vehicle and the subject vehicle is sufficiently short in Fig. 11C, a pedestrian cannot cross the road.

Fig. 11D shows a light distribution pattern that is formed by blocking a beam on the road surface on which an oncoming vehicle is present in the combined light distribution of Fig. 11C described with reference to Figs. 10A to 10C. Since a beam corresponding to the road surface on which an oncoming vehicle is present is cut when the oncoming vehicle is present, the amount of light irradiating the road surface is also cut. Accordingly, light is blocked on a portion of the road surface on which the oncoming vehicle A is present.

In addition, since light is blocked in the region of a shoulder 61a of the opposite lane 61, which is positioned outside the oncoming vehicle A, the corresponding amount of light is distributed to the travel lane 63. Accordingly, a driver can watch the region of the travel lane close to the subject vehicle (the third quadrant described in Fig. 17) and the region of the travel lane distant from the subject vehicle (the second quadrant) without being distracted by the opposite lane. Meanwhile, in Figs. 10 and 11D, the illuminance of the road surface near the oncoming vehicle is reduced due to the blocking of light, but the irradiation performance on the road surface of a shoulder 61b of the opposite lane 61, which is closer than the subject vehicle, is not so reduced even though light is reduced above the H-H line.

Meanwhile, since the glare angle (an angle between the line of sight of an object to be recognized and a beam of a headlight of the oncoming vehicle) of a pedestrian or a small animal present on the shoulder of the travel lane is larger than the glare angle of an object that is to be recognized and is present close to the opposite lane, the influence of glare on the visibility of a pedestrian or a small animal, which is present on the shoulder of the travel lane, is small. Accordingly, an effect caused by the improvement of the amount of illumination light of the headlight of the subject vehicle is large regardless of whether the oncoming vehicle is distant from or close to the subject vehicle.

### Second embodiment

Meanwhile, the light distribution control system of the first embodiment, which employs the above-mentioned whole surface matrix beam, also has the following problems to be solved.

In the first embodiment, a liquid crystal element or a MEMS element has been used as the light distribution control element 35 that blocks only a portion of the ADB corresponding to the oncoming vehicle in accordance with the change of the position of the oncoming vehicle.

However, there has been a problem in that the amount of light having been transmitted through liquid crystal is reduced to 1/2 or less of the amount of light that does not yet enter since the liquid crystal element uses a polarizer. In the case of the MEMS element, there has been a problem in that the loss of light is caused since an ineffective portion is present between elements. For this treason, there has been a problem in that it is not possible to sufficiently obtain the irradiation performance on the road surface.

Accordingly, in this embodiment, a problem of the loss of light is solved by the improvement of light amount controller that is formed of a liquid crystal element or a MEMS element.

### (Structure of light distribution control element)

Fig. 12 is a schematic view illustrating light amount controller according to this embodiment.

In light amount controller shown in Fig. 12, a range including a main optical axis of a light source 32 forms a non-element portion (non-control portion) 35B and a portion outside the range forms an element portion (control portion) 35A.

The non-element portion 35B is a simple reflective window or transmissive window that is not provided with liquid crystal or MEMS. Since the non-element portion 35B is not provided with a liquid crystal element or a MEMS element, the loss of light is not caused, the utilization efficiency of light is increased, and the light amount controller can emit a spot beam, which has increased luminous flux, from the central portion thereof. Accordingly, it is possible to improve the luminous intensity of the central portion and to ensure visibility in the distance.

Meanwhile, the non-element portion 35B, which is positioned at the central portion of the light amount controller 35 of this embodiment, is not limited to the combination of rectangular shapes shown in Fig. 12 and may have an oblong shape (simple rectangular shape).

Further, like the case of the first embodiment, the element portion 35A, which is positioned at the peripheral portion of the light amount controller, can reduce or block light by finely controlling the amount of light and a control range of a beam 101 according to the presence of an oncoming vehicle or the position of the oncoming vehicle.

Figs. 13A and 13B are views illustrating a light distribution pattern of a light distribution control system of this embodiment.

Fixed light distribution generated from a main lamp unit 20 is the same as the fixed light distribution of the first embodiment shown in Fig. 9A.

Fig. 13A shows an example of a variable beam (variable light distribution) 100 generated from a sub-lamp unit 30 of this embodiment.

Further, Fig. 13B shows combined light distribution 103 that is obtained by combining the variable beam 100 with the fixed light distribution generated from the main lamp unit 20.

Fig. 13B shows light distribution of this embodiment when there is no oncoming vehicle, and the main optical axis is parallel to a HV (front) direction. Accordingly, the light distribution of a high beam is obtained.

As shown in Fig. 13, the variable beam 100 includes an elliptical beam 101 that is generated from the element portion 35A shown in Fig. 12, and a spot beam 102 that is generated from the non-element portion 35B positioned at the center thereof.

As described above, the utilization efficiency of light of the non-control portion 35B is higher than that of the control portion 35A that is provided with a liquid crystal element or a MEMS element. For this reason, the luminous intensity of the spot beam 102 emitted from the non-control portion 35B is increased, so that the irradiation performance of the spot beam 102 in the distance is also improved.

However, when a maximum luminous intensity portion 102a of the spot beam 102 is directed toward the HV point, the maximum luminous intensity portion 102a also irradiates an oncoming vehicle, so that glare is directed at the oncoming vehicle except when the oncoming vehicle is close to the subject vehicle.

For this reason, when the oncoming vehicle is present in the distance, the central portion of the spot beam 102 is directed toward the shoulder of the travel lane (the direction of an arrow in Fig. 13A).

Further, when the oncoming vehicle becomes sufficiently close to the subject vehicle and the oncoming vehicle starts to be separated from the HV point by about 1° (a headway time of 5 sec), the maximum luminous intensity portion 102a of the spot beam 102 may be made to return to the HV point in accordance with the degree of the separation of the oncoming vehicle from the HV point.

In this way, when the oncoming vehicle is present, the irradiation distance and illuminance of the distant region and the shoulder of the travel lane are improved and the visibility of the distant region and the shoulder of the travel lane is improved as compared to the case of the whole surface matrix beam of the first embodiment.

Meanwhile, since a beam corresponding to the road surface on which an oncoming vehicle is present is cut when the oncoming vehicle is present, the amount of light irradiating the road surface is also cut like in the first embodiment.

Further, when the oncoming vehicle becomes sufficiently close to the subject vehicle at the distance (30 m) corresponding to a headway time of 1.0 sec, exposure to glare occurs for a short time and there is no safety problem. For this reason, the blocking of light on the oncoming vehicle is stopped so that the maximum luminous intensity portion of the spot beam is made to return to the HV point (light distribution when there is no oncoming vehicle).

Furthermore, the fact that the first and second inter-vehicle distances or a headway time is reduced (adjusted) as the speed of a vehicle is increased is the same as that in the first embodiment.

Figs. 14A to 14C are views showing examples of light distribution control of this embodiment, and shows that a light distribution pattern including light blocking is changed as a distance between an oncoming vehicle and a subject vehicle is changed.

Figs. 14A to 14C show an example of a case that a plurality of oncoming vehicles (an oncoming vehicle A and an oncoming vehicle B) travels on the opposite lane of a straight road.

Meanwhile, in the examples shown in Figs. 14A to 14C, the non-element portion 35B and the spot beam 102 have a simple rectangular shape.

Fig. 14A shows an example of light blocking when all the oncoming vehicles are present at a relative distance that is equal to or larger than the first predetermined value. Meanwhile, a first headway time, which corresponds to a relative distance having the first predetermined value, is set to 5 sec as in the first embodiment.

In Fig. 14A, the oncoming vehicle A is present at a position 5 sec ahead of the subject vehicle and the oncoming vehicle B is present at a position 10 sec ahead of the subject vehicle. Accordingly, both the oncoming vehicles also travel at the positions where the relative distance between the oncoming vehicle and the subject vehicle is equal to or larger than the first predetermined value.

In this case, the light distribution control ECU 50 performs a control, which moves the optical axis of the light source (moves a spot beam) toward the travel lane, by driving the sub-lamp unit 30 so as not to create glare (glare) to the oncoming vehicles, and individually blocks light for oncoming vehicles A and B by controlling the element portion 35A of the light distribution control element 35. Regions where light is blocked are regions 90A and 90B corresponding to the range of ±0.5° from the detected positions of the oncoming vehicles, respectively. Accordingly, it is possible to reduce glare directed at the oncoming vehicles A and B and to improve safety.

In this case, light is blocked in the region 90A extending over substantially the entire size of the oncoming vehicle A as for the oncoming vehicle A and light is blocked in the region 90B corresponding to the range of ±0.5° like the case of Fig. 14A as for the oncoming vehicle B that is present at the position where a headway time between the subject vehicle and the oncoming vehicle is 5 sec.

When an oncoming vehicle is detected or when a headway time between the subject vehicle and an oncoming vehicle is equal to or longer than 10 sec and an oncoming vehicle is present in the distance, it is possible to direct the main optical axis of the sub-lamp unit 30 toward the opposite lane, to increase the amount of light irradiating the travel lane and the shoulder of the travel lane, and to improve the visibility of a pedestrian or a small animal that is present near the travel lane. Further, it is possible to prevent glare from being directed at the oncoming vehicle and to improve the visibility of an object, which is to be recognized and is present in the opposite lane or the shoulder, by blocking only a portion of light corresponding to the oncoming vehicle in the opposite lane.

Furthermore, when a plurality of oncoming vehicles are detected on the screen, the optical axis of a projector type lamp is controlled on the basis of an oncoming vehicle positioned in the distance.

Fig. 14B shows an example of light blocking when the oncoming vehicle A is present at a relative distance that is equal to or larger than the second predetermined value. Meanwhile, a second headway time is set to 1 sec as in the first embodiment.

In Fig. 14B, the oncoming vehicle A is present at a position where a headway time between the subject vehicle and the oncoming vehicle is 2 sec. Accordingly, the oncoming vehicle A travels at the position where the relative distance between the oncoming vehicle and the subject vehicle is equal to or larger than the second predetermined value and smaller than the first predetermined value.

In this case, the light distribution control ECU 50 moves the optical axis toward the opposite lane (the HV point) by driving the sub-lamp unit 30 in accordance with the movement of the oncoming vehicle A that is moved to the right side on the screen (the direction of an arrow in Fig. 14B), and operates the light distribution control element 35 (element portion 35A) so as to block light corresponding to the oncoming vehicle by blocking or reducing light on the region 92 corresponding to the oncoming vehicle. Accordingly, it is possible to quickly and visually recognize an object that is to be recognized and rushes out from the rear of the oncoming vehicle A.

When the oncoming vehicle becomes close to the subject vehicle up to a distance where a headway time is 2 sec like the oncoming vehicle A of Fig. 14B, the light-blocking size of the oncoming vehicle is increased (and becomes the size of the oncoming vehicle) and there is no meaning in the illumination of the outside of the oncoming vehicle.

Fig. 14C is a view showing an example of light blocking when the oncoming vehicle A closest to the subject vehicle deviates to a relative distance smaller than the second predetermined value.

When the oncoming vehicle becomes close to the subject vehicle at a distance shorter than a headway distance corresponding to 1S, the position of the oncoming vehicle on the screen is significantly distant from the HV point. For this reason, the amount of irradiation light of the headlamp is reduced and irradiation time is reduced. As a result, there is no problem of glare.

Accordingly, when a headway time or a headway distance between the oncoming vehicle and the subject vehicle becomes equal to or smaller than the second predetermined value, the optical axis is made to return to the front in the traveling direction by the driving of the sub-lamp unit 30.

When the oncoming vehicle becomes close to the subject vehicle until a headway time becomes about I sec or less, a beam is made to return to an initial state (a condition where there is no oncoming vehicle; the main optical axis of the ADB is directed toward the HV point and the blocking of light on the oncoming vehicle is released) so that visibility in the distance is ensured.

Figs. 15A to 15D are views showing the change of light distribution of this embodiment by a road-surface light distribution pattern.

Fig. 15A shows a road-surface light distribution pattern that is formed by the combined light distribution 103 of Fig. 13B, and an oncoming vehicle is not present in the opposite lane 61. Accordingly, the optical axis Ax of the sub-lamp unit of a subject vehicle C is directed forward.

Fig. 15B shows a road-surface light distribution pattern when the oncoming vehicle A is present in the opposite lane 61 at a relative position corresponding to a value that is equal to or larger than the first predetermined value, and this road-surface light distribution pattern corresponds to the light distribution of Fig. 14A.

The optical axis Ax of the subject vehicle C is directed toward a shoulder 63a of the travel lane 63 so as not to glare the oncoming vehicle A.

Further, light is blocked in the region 90A, which corresponds to the oncoming vehicle A, through the control of the light amount controller 35.

Meanwhile, the fact that a light-blocking range corresponding to the oncoming vehicle needs to be about 1.0° even in the case of the minimum visual angle size is the same as that in the first embodiment.

Fig. 15C shows a road-surface light distribution pattern when the oncoming vehicle A is present at a relative position corresponding to a value that is smaller than the first predetermined value and equal to or larger than the second predetermined value, and this road-surface light distribution pattern shown in Fig. 15C corresponds to the light distribution of Fig. 14B.

As the oncoming vehicle A becomes close to the subject vehicle, the optical axis Ax of the subject vehicle C is made to return to the opposite lane 61 as much as glare is not directed at the oncoming vehicle A.

In this case, a driver of the subject vehicle C cannot visually recognize a pedestrian M2 who is present ay a position 61c on the shoulder 61a of the opposite lane 61.

However, since the relative distance between the subject vehicle C and the oncoming vehicle A is sufficiently small, there is no concern that the pedestrian M2 crosses the road.

Fig. 15D shows a road-surface light distribution pattern when the oncoming vehicle A is present at a relative position corresponding to a value smaller than the second predetermined value, and this road-surface light distribution pattern shown in Fig. 15D corresponds to the light distribution of Fig. 14C.

At this point, when the oncoming vehicle becomes sufficiently close to the subject vehicle at the distance (30 m) corresponding to a headway time of 1.0 sec, exposure to glare occurs for a short time and there is no safety problem. For this reason, the blocking of light on the oncoming vehicle is stopped and the optical axis Ax also returns to the front (the optical axis is made to return to the light distribution shown in Fig. 13 when there is no oncoming vehicle).

When the light distribution of the ADB is controlled with a factor, such as a headway time or an inter-vehicle distance as described above, as in the first embodiment, it is possible to effectively illuminate a position required for visual recognition while suppressing glare directed at an oncoming vehicle.

When a plurality of oncoming vehicles are detected, a spot beam is controlled on the basis of an oncoming vehicle positioned in the distance.

## Claims

1. A light distribution controller (50) for controlling a light distribution pattern which is formed by light emitted from a vehicle headlamp (1) of a vehicle (C) so as to prevent glare light from being directed to a front vehicle (A, B) which exists in front of the vehicle and which is an oncoming vehicle traveling in an opposite lane opposite to a lane in which the vehicle is traveling, based on a relative distance between the vehicle and the front vehicle in a vehicle traveling direction,
wherein the light distribution controller is configured to control the light distribution pattern so as to block or reduce light directed to a second region (91) where the front vehicle is present and a third region (92) which is located outside the front vehicle and closer to a road shoulder side, when the relative distance is in a range of a second value to a first value, wherein the second value is smaller than the first value,
**characterized in that** the light distribution controller is configured to control the light distribution pattern so as to block or reduce light directed to a first region (90A, 90B) where the front vehicle is present, when the relative distance is larger than the first value,
and **in that** the light distribution controller is configured to control the light distribution pattern without blocking or reducing light directed to a fourth region where the front vehicle is present, when the relative distance is smaller than the second value.

2. The light distribution controller of claim **1,**
wherein the light distribution controller is configured to control the light distribution pattern using a MEMS element (35a) so as to block the light directed to the first region, the second region, and the third region.

3. The light distribution controller of claim **1,**
wherein the light distribution controller is configured to control the light distribution pattern using a liquid crystal element (35b) so as to reduce light amount of the light directed to the first region, the second region, and the third region.

4. The light distribution controller of claim **2,**
wherein the MEMS element (35a) comprises: a transmissive window (35B); and an element portion (35A) surrounding the transmissive window, wherein the light transmittance of the transmissive window is larger than that of the element portion.

5. The light distribution controller of claim **3,**
wherein the liquid crystal element (35b) comprises: a transmissive window (35B); and an element portion (35A) surrounding the transmissive window, wherein the light transmittance of the transmissive window is larger than that of the element portion.

6. The light distribution controller of claim **4** or **5,** wherein light passing through the transmissive window (35B) creates a spot beam (102) having a stronger luminous flux than that of any other regions in the light distribution pattern.

7. The light distribution controller of claim **6,**
wherein the light distribution controller is configured to control the light distribution pattern such that the spot beam (102) is moved from an original position to a first position away from the opposite lane, when the relative distance is larger than the first value,
wherein the light distribution controller is configured to control the light distribution pattern such that the spot beam (102) is moved from the first position to the original position, when the relative distance is in a range of the second value to the first value, and
wherein the light distribution controller is configured to control the light distribution pattern such that the spot beam (102) is located in the original position, when the relative distance is smaller than the second value.

## Patentansprüche

1. Lichtverteilungssteuerung (50) zur Steuerung eines Lichtverteilungsmusters, das durch Licht, das aus einem Fahrzeugscheinwerfer (1) eines Fahrzeugs (C) ausgestrahlt wird, gebildet wird, um zu verhindern, dass Blendlicht auf ein vorderes Fahrzeug (A, B) gerichtet ist, das sich vor dem Fahrzeug befindet und das ein entgegenkommendes Fahrzeug ist, das sich auf einer Gegenfahrbahn bewegt, die der Fahrbahn, in der sich das Fahrzeug bewegt, entgegengesetzt ist, basierend auf einem relativen Abstand zwischen dem Fahrzeug und dem vorderen Fahrzeug in einer Fahrzeugbewegungsrichtung,
wobei die Lichtverteilungssteuerung konfiguriert ist, das Lichtverteilungsmuster zu steuern, um das auf einen zweiten Bereich (91), in dem sich das vordere Fahrzeug befindet, und einen dritten Bereich (92), der sich außerhalb des vorderen Fahrzeugs und näher an einer Straßen-Randstreifenseite befindet, gerichtete Licht zu blockieren oder zu reduzieren, wenn der relative Abstand in einem Bereich von einem zweiten Wert bis zu einem ersten Wert liegt, wobei der zweite Wert kleiner als der erste Wert ist,
**dadurch gekennzeichnet, dass** die Lichtverteilungssteuerung konfiguriert ist, das Lichtverteilungsmuster zu steuern, um auf einen ersten Bereich (90A, 90B), in dem sich das vordere Fahrzeug befindet, gerichtetes Licht zu blockieren oder zu reduzieren, wenn der relative Abstand größer als der erste Wert ist,
und dadurch, dass die Lichtverteilungssteuerung konfiguriert ist, das Lichtverteilungsmuster zu steuern, ohne das auf einen vierten Bereich, in dem sich das vordere Fahrzeug befindet, gerichtete Licht zu blockieren oder zu reduzieren, wenn der relative Abstand kleiner als der zweite Wert ist.

2. Lichtverteilungssteuerung nach Anspruch 1,
wobei die Lichtverteilungssteuerung konfiguriert ist, das Lichtverteilungsmuster mithilfe eines MEMS-Elements (35a) zu steuern, um das Licht, das auf den ersten Bereich, den zweiten Bereich und den dritten Bereich gerichtet ist, zu blockieren.

3. Lichtverteilungssteuerung nach Anspruch 1,
wobei die Lichtverteilungssteuerung konfiguriert ist, das Lichtverteilungsmuster mithilfe eines Flüssigkristallelements (35b) zu steuern, um die Lichtmenge des Lichts, das auf den ersten Bereich, den zweiten Bereich und den dritten Bereich gerichtet ist, zu reduzieren.

4. Lichtverteilungssteuerung nach Anspruch 2,
wobei das MEMS-Element (35a) umfasst: ein durchlässiges Fenster (35B); und einen Elementabschnitt (35A), der das durchlässige Fenster umgibt, wobei die Lichtdurchlässigkeit des durchlässigen Fensters größer als die des Elementabschnitts ist.

5. Lichtverteilungssteuerung nach Anspruch 3,
wobei das Flüssigkristallelement (35b) umfasst: ein durchlässiges Fenster (35B) und einen Elementabschnitt (35A), der das durchlässige Fenster umgibt, wobei die Lichtdurchlässigkeit des durchlässigen Fensters größer als die des Elementabschnitts ist.

6. Lichtverteilungssteuerung nach Anspruch 4 oder 5, wobei Licht, das durch das durchlässige Fenster (35B) hindurchtritt, einen Punktstrahl (102) erzeugt, der einen Lichtstrom aufweist, der stärker als der beliebiger anderer Bereiche in dem Lichtverteilungsmuster ist.

7. Lichtverteilungssteuerung nach Anspruch 6,
wobei die Lichtverteilungssteuerung konfiguriert ist, das Lichtverteilungsmuster derart zu steuern, dass der Punktstrahl (102) von einer ursprünglichen Position weg von der entgegengesetzten Fahrspur zu einer ersten Position bewegt wird, wenn der relative Abstand größer als der erste Wert ist,
wobei die Lichtverteilungssteuerung konfiguriert ist, das Lichtverteilungsmuster derart zu steuern, dass der Punktstrahl (102) von der ersten Position zur der ursprünglichen Position bewegt wird, wenn der relative Abstand in einem Bereich von dem zweiten Wert bis zu dem ersten Wert liegt, und
wobei die Lichtverteilungssteuerung konfiguriert ist, das Lichtverteilungsmuster derart zu steuern, dass sich der Punktstrahl (102) an der ursprünglichen Position befindet, wenn der relative Abstand kleiner als der zweite Wert ist.

## Revendications

1. Dispositif de commande de distribution lumineuse (50) destiné à commander un modèle de distribution lumineuse qui est formé par la lumière émise par un phare de véhicule (1) d'un véhicule (C) de façon à empêcher de la lumière éblouissante d'être orientée vers un véhicule d'en face (A, B) qui existe en face du véhicule et qui est un véhicule en approche qui se déplace sur une voie opposée à une voie sur laquelle le véhicule se déplace, sur la base d'une distance relative entre le véhicule et le véhicule d'en face dans une direction de déplacement du véhicule,
dans lequel le dispositif de commande de distribution lumineuse est configuré pour commander le modèle de distribution lumineuse de façon à bloquer ou à réduire la lumière orientée vers une deuxième zone (91) dans laquelle le véhicule d'en face est présent et une troisième zone (92) qui se trouve à l'extérieur du véhicule d'en face et plus proche d'un bord de chaussée, lorsque la distance relative est dans une plage d'une seconde valeur à une première valeur, la seconde valeur étant inférieure à la première valeur,
**caractérisé en ce que** le dispositif de commande de distribution lumineuse est configuré pour commander le modèle de distribution lumineuse de façon à bloquer ou à réduire la lumière orientée vers une première zone (90A, 90B) dans laquelle le véhicule d'en face est présent, lorsque la distance relative est supérieure à la première valeur,
et **en ce que** le dispositif de commande de distribution lumineuse est configuré pour commander le modèle de distribution lumineuse sans bloquer ou réduire la lumière orientée vers une quatrième zone dans laquelle le véhicule d'en face est présent, lorsque la distance relative est inférieure à la seconde valeur.

2. Dispositif de commande de distribution lumineuse selon la revendication 1,
dans lequel le dispositif de commande de distribution lumineuse est configuré pour commander le modèle de distribution lumineuse à l'aide d'un élément MEMS (35a) de façon à bloquer la lumière orientée vers la première zone, la deuxième zone, et la troisième zone.

3. Dispositif de commande de distribution lumineuse selon la revendication 1,
dans lequel le dispositif de commande de distribution lumineuse est configuré pour commander le modèle de distribution lumineuse à l'aide d'un élément à cristaux liquides (35b) de façon à réduire la quantité de lumière de la lumière orientée vers la première zone, la deuxième zone, et la troisième zone.

4. Dispositif de commande de distribution lumineuse selon la revendication 2,
dans lequel l'élément MEMS (35a) comprend : une fenêtre transmissive (35B) ; et une partie d'élément (35A) entourant la fenêtre transmissive, dans lequel la transmittance lumineuse de la fenêtre transmissive est supérieure à celle de la partie d'élément.

5. Dispositif de commande de distribution lumineuse selon la revendication 3,
dans lequel l'élément à cristaux liquides (35b) comprend : une fenêtre transmissive (35B) ; et une partie d'élément (35A) entourant la fenêtre transmissive, dans lequel la transmittance lumineuse de la fenêtre transmissive est supérieure à celle de la partie d'élément.

6. Dispositif de commande de distribution lumineuse selon la revendication 4 ou 5, dans lequel la lumière qui passe à travers la fenêtre transmissive (35B) crée un faisceau ponctuel (102) ayant un flux lumineux plus fort que celui de n'importe quelle autre zone du modèle de distribution lumineuse.

7. Dispositif de commande de distribution lumineuse selon la revendication 6,
dans lequel le dispositif de commande de distribution lumineuse est configuré pour commander le modèle de distribution lumineuse de sorte que le faisceau ponctuel (102) soit déplacé d'une position d'origine vers une première position éloignée de la voie opposée, lorsque la distance relative est supérieure à la première valeur,
dans lequel le dispositif de commande de distribution lumineuse est configuré pour commander le modèle de distribution lumineuse de sorte que le faisceau ponctuel (102) soit déplacé de la première position vers la position d'origine, lorsque la distance relative est de l'ordre de la seconde valeur à la première valeur, et
dans lequel le dispositif de commande de distribution lumineuse est configuré pour commander le modèle de distribution lumineuse de sorte que le faisceau ponctuel (102) se trouve dans la position d'origine, lorsque la distance relative est inférieure à la seconde valeur.
